# EUROPÄISCHE PATENTSCHRIFT

(11) **EP 1 977 102 B1**
(45) Veröffentlichungstag und Bekanntmachung des Hinweises auf die Patenterteilung: **12.05.2010**
(21) Anmeldenummer: 06828687.1
(22) Anmeldetag: 15.12.2006
(51) Int. Cl.: F02F 3/16, F01M 11/02, F16J 1/00

(54) **KOLBEN FÜR EINEN VERBRENNUNGSMOTOR UND VERFAHREN ZU SEINER HERSTELLUNG**
PISTON FOR AN INTERNAL COMBUSTION ENGINE AND METHOD FOR PRODUCTION THEREOF
PISTON POUR MOTEUR A COMBUSTION INTERNE ET PROCEDE POUR LE PRODUIRE

(30) Priorität: 21.12.2005 DE 102005061074
(43) Veröffentlichungstag der Anmeldung: 08.10.2008
(73) Patentinhaber: Mahle International GmbH, 70376 Stuttgart (DE)
(72) Erfinder: LEITL, Markus, 73630 Remshalden (DE)
(74) Vertreter: Pohle, Reinhard
(86) Internationale Anmeldenummer: PCT/DE2006/002256
(87) Internationale Veröffentlichungsnummer: WO 2007/076812

(56) Entgegenhaltungen:
- EP-A1- 0 775 542
- DE-A1- 10 114 404
- GB-A- 2 335 253

## Beschreibung

Die vorliegende Erfindung betrifft ein Verfahren zur Herstellung eines Kolbens für einen Verbrennungsmotor mit einem gegossenen Kolbenkopf, mindestens einem in den Kolbenkopf eingegossenen Ringträger und einem in Höhe des Ringträgers im Kolbenkopf umlaufenden Kühlkanal.

Insbesondere bei hoch belasteten Verbrennungsmotoren, wie bspw. Dieselmotoren, sind die in der obersten Ringnut eingesetzten Kolbenringe besonders großen Temperaturbelastungen ausgesetzt. Daher wird zumindest die oberste Ringnut mit einem Ringträger als Armierung ausgestattet, wie in der DE 101 14 404 A1 angegeben. Der Ringträger wird in der Regel aus einem abriebfesten Metall oder aus Gusseisen, vorzugsweise Niresist, einem austenitischen Gusseisen, hergestellt. Zudem ist in Höhe des Ringträgers ein umlaufender Kühlkanal vorgesehen, der möglichst nahe an der Ringnut platziert ist, um eine gute Kühlung der Ringnut und des darin eingesetzten Kolbenrings zu gewährleisten. Der Kühlkanal aus einem am Ringträger angebundenen Kühlkanalbauteil gebildet. Zur Herstellung des Kolbens wird der Ringträger mit dem damit verbundenen Kühlkanalbauteil in eine Gussform eingelegt und beim Gießen des Kolbens oder Kolbenkopfes umgossen und auf diese Weise im Kolbenkopf gehalten.

Es ist auch bekannt, bei der Herstellung gegossener Kolben den umlaufenden Kühlkanal dadurch herzustellen, dass in die Gussform ein Salzkern eingelegt wird. Der Salzkern wird nach dem Gießen entfernt, indem der Kühlkanal durch die Zulauf- bzw. Ablauföffnung für das Kühlmittel hindurch mit Wasser ausgespült wird.

Im Stand der Technik sind mehrere Verfahren bekannt, das Eingießen eines Ringträgers und das Herstellen eines Kühlkanals mittels eines Salzkerns zu kombinieren, um auf ein separates Kühlkanalbauteil verzichten zu können. Die JP 01 224 158 A offenbart ein Verfahren, bei dem ein Faserverbundkörper mit einem darin integrierten Salzkern verwendet wird. Die DE 197 01 085 A1 und die DE 298 23 552 U1 zeigen ein Verfahren, bei dem der Ringträger durch Haltemittel mit dem Salzkern verbunden ist. Die DE 103 25 916 A1 beschreibt ein Verfahren, bei dem der Ringträger auf seiner Rückseite eine nach unten offene Ausnehmung aufweist, in die ein Salzkern aufgenommen ist.

Diese bekannten Verfahren haben gemeinsam, dass sie alle aufwändig bzw. umständlich sind, sei es durch die Anbringung der Haltemittel zwischen Salzkern und Ringträger, sei es durch die Herstellung einer am Ringträger vorgesehenen Ausnehmung.

Die Aufgabe der vorliegenden Erfindung besteht darin, ein Verfahren zur Herstellung eines Kolbens anzugeben, bei dem der Kolben mindestens einen Ringträger und auf der Höhe des Ringträgers einen umlaufenden Kühlkanal aufweist und das einfach und kostengünstig durchführbar ist.

Die Lösung besteht in einem Verfahren mit den Merkmalen des Anspruchs 1. Erfindungsgemäß ist vorgesehen, dass der radial nach außen gerichtete Wandbereich des Kühlkanals durch den Ringträger gebildet ist und die restlichen Wandbereiche des Kühlkanals durch den Kolbenkopf gebildet sind. Das Verfahren zeichnet sich dadurch aus, dass ein ringförmiger Salzkern entlang der radialen Innenfläche eines ringförmigen Ringträgers oder Ringträgerrohlings zumindest teilweise zur Anlage gebracht wird, der Ringträger oder Ringträgerrohling und der Salzkern gemeinsam erhitzt werden, derart dass der Salzkern und der Ringträger oder Ringträgerrohling miteinander verbunden werden, das resultierende Bauteil aus Ringträger oder Ringträgerrohling und Salzkern in eine Gussform verbracht wird und das resultierende Bauteil in der Gussform umgossen wird.

Der Kolben zeichnet sich durch einen einfachen Aufbau aus. Insbesondere kann auf Halteelemente zwischen Salzkern und Ringträger bzw. auf einen vollständig von einem Ringträger umschlossenen Salzkern verzichtet werden. Da der Kühlkanal über einen Großteil seines Umfangs direkt an den Kolbenkopf grenzt, ist die Wärmeableitung verbessert, wodurch eine wirksamere Kühlung möglich wird. Damit wird die Belastung der Ringpartie, insbesondere des dem Kühlkanal zugeordneten Kolbenrings verringert, was zu einer zuverlässigeren Funktion des erfindungsgemäßen Kolbens während seines Betriebs führt und seine Lebensdauer erhöht. Das erfindungsgemäße Herstellungsverfahren ist gegenüber dem Stand der Technik wesentlich vereinfacht und somit besonders kostengünstig und wirtschaftlich.

Vorteilhafte Weiterbildungen ergeben sich aus den Unteransprüchen.

In der Regel trägt der Ringträger die oberste Ringnut, weil der oberste Kolbenring (Verdichtungsring) und damit die oberste Ringnut den größten thermischen und mechanischen Belastungen ausgesetzt ist. In Einzelfällen kann der Ringträger aber auch die zur obersten Ringnut benachbarte Ringnut bilden.

Der mindestens eine Ringträger ist vorzugsweise aus NiResist-Werkstoff hergestellt, da dieser Werkstoff sich hierfür bewährt hat. Unter der Bezeichnung NiResist werden austenitische Graugusswerkstoffe zusammengefasst, die sich insbesondere durch Korrosionsbeständigkeit auszeichnen sowie dem Kolbenkopfmaterial vergleichbare thermische Eigenschaften wie bspw. Ausdehnungskoeffizienten aufweisen.

Für das erfindungsgemäße Verfahren kann auch ein Ringträgerrohling verwendet werden, in welchen nach dem Umgießen des Ringträgerrohlings im Zuge der Kolbenherstellung eine Ringnut eingearbeitet wird.

Der Salzkern kann in vorteilhafter Weise z. B. entlang der Ober- und Unterkante des Ringträgers bzw. Ringträgerrohlings zur Anlage gebracht werden. Auf diese Weise können der Ringträger bzw. der Ringträgerrohling und der Salzkern in Form eines Klemmsitzes miteinander verbunden werden. Damit erhält man auf besonders einfache Weise ein einheitliches Bauteil, das, ggf. nach einer Vorbehandlung wie bspw. einem Al-Fin-Verfahren, problemlos in die Gussform eingebracht werden kann.

Je nach verwendetem Material für den Ringträger bzw. den Ringträgerrohling werden dieser und der Salzkern bspw. auf eine Temperatur von 400 bis 750°C, vorzugsweise 700°C, erhitzt.

Um den Salzkern auf besonders einfache Weise in der gewünschten Position am Ringträger bzw. Ringträgerrohling zur Anlage zu bringen, können der Ringträger bzw. Ringträgerrohling und der Salzkern vor dem Erhitzen in einer Positioniervorrichtung angeordnet werden. Die Positioniervorrichtung weist Auflageflächen für den Ringträger bzw. Ringträgerrohling und den Salzkern auf, die die korrekte Positionierung von Ringträger bzw. Ringträgerrohling und Salzkern zueinander bewirken.

Mit dem erfindungsgemäßen Verfahren kann sowohl ein vollständiger ein Kolben als auch ein Kolbenkopf hergestellt werden.

Ein Ausführungsbeispiel der Erfindung wird im Folgenden anhand der beigefügten Zeichnungen näher erläutert. Es zeigen in einer schematischen, nicht maßstabsgetreuen Darstellung:
- Fig. 1: einen Schnitt durch ein Ausführungsbeispiel eines erfindungsgemäßen Kolbens;
- Fig. 2: eine Positioniervorrichtung mit positioniertem Ringträger und positioniertem Salzkern im Halbschnitt vor dem Erhitzen;
- Fig. 3: eine Positioniervorrichtung gemäß Fig. 2 nach dem Erhitzen.

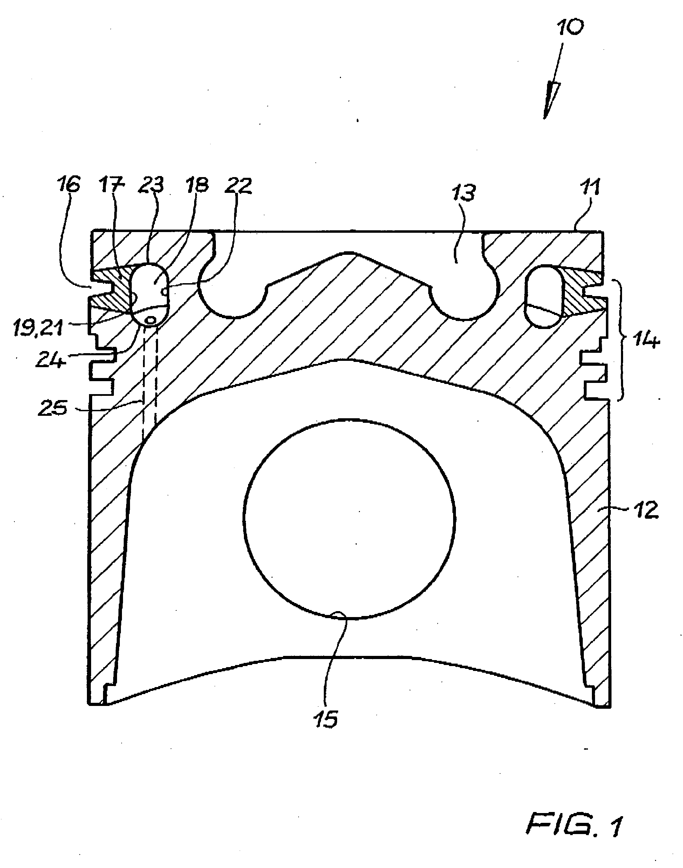

Fig. 1 zeigt ein Ausführungsbeispiel eines nach dem erfindungsgemäßen Verfahren hergestellten Kolben 10. Der Kolben 10. Der Kolben 10 umfasst einen Kolbenkopf 11 und einen sich daran axial anschließenden Kolbenschaft 12. Der Kolbenkopf 11 weist eine Verbrennungsmulde 13 sowie eine um seinen Umfang umlaufende Ringpartie 14 mit Ringnuten zur Aufnahme von Kolbenringen (nicht dargestellt) auf. Im Bereich des Kolbenschaftes 12 ist eine Bohrung 15 zur Aufnahme eines Kolbenbolzens (nicht dargestellt) vorgesehen. Der Kolben 10 ist im Ausführungsbeispiel aus einem metallischen Werkstoff, bspw. einem Aluminiumwerkstoff, gegossen.

Die oberste Ringnut 16 bzw. Verdichtungsringnut der Ringpartie 14 ist mit einem Ringträger 17, bspw, aus einem NiResist-Werkstoff, versehen. Der Kolbenkopf 11 weist ferner in Höhe der Ringnut 16 bzw. des Ringträgers 17 einen ringförmig umlaufenden Kühlkanal 18 auf. Dabei wird lediglich der radial nach außen gerichtete bzw. radial außen liegende Wandbereich 19 des Kühlkanals 18 durch den Ringträger 17 selbst, nämlich durch die radiale Innenfläche 21 des Ringträgers 17 gebildet. Die verbleibenden Wandbereiche des Kühlkanals 18, nämlich der radial nach innen gerichtete Wandbereich 22, der axial nach oben gerichtete Wandbereich 23 und der axial nach unten gerichtete Wandbereich 24, werden durch den Kolbenkopf 11 selbst gebildet.

Im axial nach unten gerichteten Wandbereich 24 des Kühlkanals 18 sind im Ausführungsbeispiel Zulauf- bzw. Ablaufkanäle 25 für Kühlmittel vorgesehen.

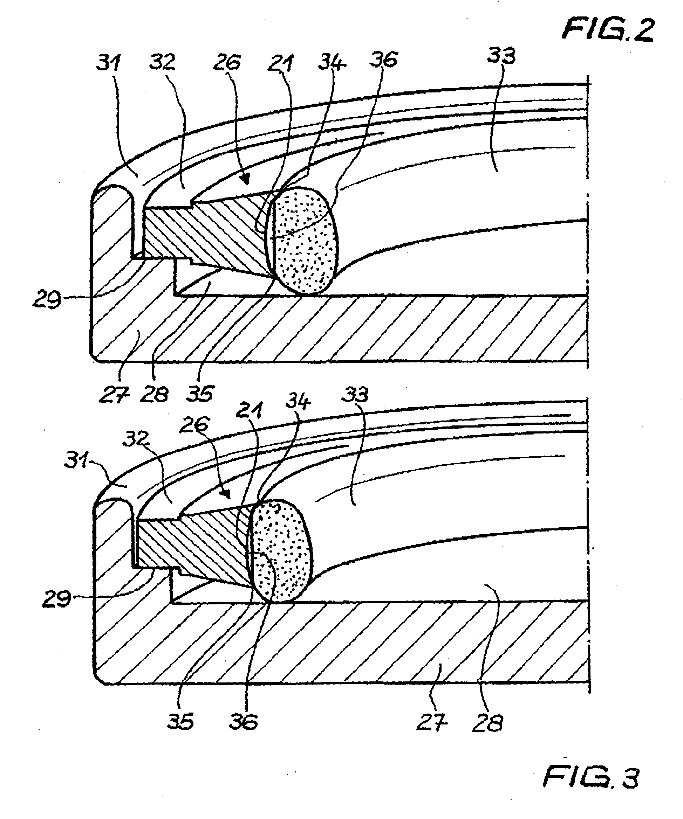

Die ersten Schritte des erfindungsgemäßen Verfahrens zur Herstellung des Kolbens 10 sind in den Fig. 2 und 3 dargestellt. Zunächst wird ein Ringträgerrohling 26, der noch keine Ringnut aufweist, in eine Positioniervorrichtung 27 eingebracht. Selbstverständlich kann auch ein fertiger Ringträger 17 verwendet werden. Die im Ausführungsbeispiel in etwa schalenförmige Positioniervorrichtung 27 weist eine zentrale Auflagefläche 28, und eine als Stufe ausgebildete ringförmig umlaufende äußere Auflagefläche 29 auf, die durch einen umlaufenden Rand 31 begrenzt wird. Die Positioniervorrichtung 27 kann aus einem schlecht Wärme leitenden Material, bspw. einem keramischen Material, bestehen. In diesem Fall erfolgt die spätere Aufheizung (s.u.) in einer separaten Heizeinrichtung, bspw. einem Heizofen. In die Positioniervorrichtung kann als Alternative hierzu auch eine Heizvorrichtung integriert sein (nicht dargestellt), so dass die spätere Aufheizung direkt durch die Positioniervorrichtung erfolgen kann, die dann aus einem Wärme leitenden Material bestehen sollte.

Der Ringträgerrohling 26 wird so in die Positioniervorrichtung 27 eingebracht, dass er mit seinem äußeren Rand 32 auf der ringförmig umlaufenden äußeren Auflagefläche 29 aufliegt. Dabei besteht zwischen dem umlaufenden Rand 31 und dem Ringträgerrohling 26 einerseits und zwischen der zentralen Auflagefläche 28 und dem Ringträgerrohling 26 andererseits jeweils ein Abstand. Der Ringträgerrohling 26 ist also sowohl gegenüber dem umlaufenden Rand 31 als auch gegenüber der zentralen Auflagefläche 28 andererseits mit einem definierten Spiel positioniert.

Nun wird ein ringförmiger Salzkern 33 derart in die Positioniervorrichtung 27 eingebracht, dass er an der radialen Innenfläche 21 des Ringträgerrohlings 26 zumindest teilweise anliegt. Der Salzkern liegt dabei auf der zentralen Auflagefläche 28 auf. Die als Stufe ausgebildete äußere Auflagefläche 29 für die Auflage des Ringträgerrohlings 26 ist in ihrer Höhe so bemessen, dass der Salzkern 33 am Ringträgerrohling 26 eine definierte Lage einnimmt, d.h. in einer definierten Position am Ringträgerrohling 26 zur Anlage gebracht wird. Im Ausführungsbeispiel ist diese definierte Position so ausgebildet, dass der Salzkern 33 jeweils an der oberen umlaufenden Kante 34 und der unteren umlaufenden Kante 35 der radialen Innenfläche 21 des Ringträgerrohlings 26 anliegt. Dabei ist die radiale Innenfläche 21 konkav gewölbt, so dass zwischen ihr und der benachbarten Seitenfläche des Salzkerns 33 ein definierter Spalt 36 besteht.

In einem folgenden Verfahrensschritt werden der Ringträgerrohling 26 und der Salzkern 33 gemeinsam erhitzt. Die Temperatur hängt von den verwendeten Materialien, insbesondere für den Ringträgerrohling 26 ab und liegt bspw. für Ringträgerrohlinge 26 aus NiResist-Werkstoffen in der Größenordnung von etwa 700°C. Wesentlich ist, dass sich der Salzkern 33 aufgrund seines größeren thermischen Ausdehnungskoeffizienten gegenüber dem Ringträgerrohling 26 ausdehnt. Für diesen Vorgang sind das oben erläuterte definierte Spiel gegenüber dem umlaufenden Rand 31 und gegenüber der zentralen Auflagefläche 28 sowie der definierte Spalt 36 gegenüber dem Salzkern 33 vorgesehen. In Fig. 3 ist deutlich zu erkennen, dass das definierte Spiel bzw. der Spalt 36 gegenüber der Darstellung in Fig. 2 verringert sind.

Das Erhitzen hat zur Folge, dass sich beim Ausdehnen des Salzkerns 33 die obere umlaufenden Kante 34 und die untere umlaufenden Kante 35 der radialen Innenfläche 21 in den Salzkern 33 eindrücken. Als Ergebnis werden der Salzkern 33 und der Ringträgerrohling 26 in einer Art Schrumpfsitz oder Klemmsitz zu einem einheitlichen Bauteil miteinander verbunden. Diese Verbindung bleibt nach dem Abkühlen bestehen.

Das resultierende Bauteil aus Ringträger und Salzkern kann somit problemlos aus der Positioniervorrichtung 27 entnommen werden. Das resultierende Bauteil wird ggf. vorbehandelt, bspw. einem Al-Fin-Verfahren ("Alfinieren") unterzogen und dann in eine Gussform verbracht, wo es im Ausführungsbeispiel mit einem AluminiumWerkstoff umgossen wird. Als Ergebnis erhält man im Ausführungsbeispiel einen Kolben 10 mit einem eingegossenen Ringträgerrohling 26. In den Ringträgerrohling 26 wird die Ringnut 16 eingebracht, so dass der fertige Ringträger 17 erhalten wird. Der Salzkern 33 wird in bekannter Weise entfernt, indem er durch die Zulauf- bzw. Ablaufkanäle 25 mit Wasser ausgespült wird.

## Patentansprüche

1. Verfahren zur Herstellung eines Kolbens (10) für einen Verbrennungsmotor, mit einem gegossenen Kolbenkopf (11), mindestens einem in den Kolbenkopf (11) eingegossenen Ringträger (17) und einem in Höhe des Ringträgers (17) im Kolbenkopf umlaufender Kühlkanal (18), mit folgenden Verfahrensschritten:
a) ein ringförmiger Salzkern (33) wird entlang der radialen Innenfläche (21) eines ringförmigen Ringträgers (17) oder Ringträgerrohlings (26) zumindest teilweise zur Anlage gebracht,
b) der Ringträger (17) oder Ringträgerrohling (26) und der Salzkern (33) werden gemeinsam erhitzt, derart dass der Salzkern (33) und der Ringträger (17) oder Ringträgerrohling (26) miteinander verbunden werden,
c) das resultierende Bauteil aus Ringträger (17) oder Ringträgerrohling (26) und Salzkern (33) wird in eine Gussform verbracht,
d) das resultierende Bauteil wird in der Gussform umgossen.

2. Verfahren nach Anspruch 1, **dadurch gekennzeichnet, dass** der Salzkern (33) entlang der Oberkante (34) und Unterkante (35) des Ringträgers (17) oder Ringträgerrohlings (26) zur Anlage gebracht wird.

3. Verfahren nach Anspruch 1 oder 2, **dadurch gekennzeichnet, dass** der Ringträger (17) oder Ringträgerrohling (26) und der Salzkern (33) in Form eines Klemmsitzes miteinander verbunden werden.

4. Verfahren nach einem der Ansprüche 1 bis 3, **dadurch gekennzeichnet, dass** der Ringträger (17) oder Ringträgerrohling (26) und der Salzkern (33) auf eine Temperatur von 600 bis 750°C, vorzugsweise 700°C erhitzt werden.

5. Verfahren nach einem der Ansprüche 1 bis 4, **dadurch gekennzeichnet, dass** der Ringträger (17) oder Ringträgerrohling (26) und der Salzkern (33) vor dem Erhitzen in einer Positioniervorrichtung (27) angeordnet und zumindest teilweise zur Anlage gebracht werden.

6. Verfahren nach einem der Ansprüche 1 bis 5, **dadurch gekennzeichnet, dass** der Ringträger (17) oder Ringträgerrohling (26) aus Niresist-Werkstoff hergestellt wird.

7. Verfahren nach Anspruch 6, dass das resultierende Bauteil vor dem Einbringen in die Gussform einem Al-Fin-Verfahren unterzogen wird;

8. Verfahren nach einem der Ansprüche 1 bis 7, **dadurch gekennzeichnet, dass** ein Ringträgerrohling (26) verwendet wird, in welches nach dem Umgießen eine Ringnut (16) eingearbeitet wird.

9. Verfahren nach einem der Ansprüche 1 bis 8, **dadurch gekennzeichnet, dass** ein Kolben (10) oder ein Kolbenkopf (11) hergestellt wird.

## Claims

1. Method for the production of a piston (10) for an internal combustion engine having a cast piston head (11), at least one ring insert (17) cast into the piston head (11) and a circumferential cooling channel (18) at the level of the ring insert (17) having the following method steps:
a) a ring-shaped salt core (33) is brought to rest against the radial inner surface (21) of a ring-shaped ring insert (17) or ring insert blank (26) at least in part,
b) the ring insert (17) or ring insert blank (26) and the salt core (33) are heated together in such a manner that the salt core (33) and the ring insert (17) or ring insert blank (26) are connected with one another,
c) the resulting component of ring insert (17) or ring insert blank (26) and salt core (33) is placed in a casting mould,
d) the resulting component is surrounded by casting material in the casting mould.

2. Method according to claim 1, **characterised in that** the salt core (33) is brought to rest along the upper edge (34) and lower edge (35) of the ring insert (17) or ring insert blank (26).

3. Method according to claim 1 or claim 2, **characterised in that** the ring insert (17) or ring insert blank (26) and the salt core (33) are connected with one another in the form of a clamp fit.

4. Method according to any one of claims 1 to 3, **characterised in that** the ring insert (17) or ring insert blank (26) and the salt core (33) are heated to a temperature of 600 to 750°C, preferably 700°C.

5. Method according to any one of claims 1 to 4, **characterised in that** the ring insert (17) or ring insert blank (26) and the salt core (33) are disposed in a positioning device (27) and brought into contact, at least in part, before being heated.

6. Method according to any one of claims 1 to 5, **characterised in that** the ring insert (17) or ring insert blank (26) is produced from Ni-Resist material.

7. Method according to claim 6, wherein the resulting component is subjected to an Al-Fin method before being placed into the casting mould.

8. Method according to any one of claims 1 to 7, **characterised in that** a ring insert blank (26) is used, into which a ring groove (16) is worked after the casting process.

9. Method according to any one of claims 1 to 8, **characterised in that** a piston (10) or a piston head (11) is produced.

## Revendications

1. Procédé de fabrication d'un piston (10) pour un moteur à combustion, avec une tête de piston coulée (11), au moins un support d'anneau (17) coulé dans la tête de piston (11) et un canal de refroidissement (18) circulant dans la tête de piston à hauteur du support d'anneau (17), comprenant les étapes de procédé suivantes consistant à :
a) mettre en appui un noyau de sel (33) en forme d'anneau au moins partiellement le long de la surface intérieure radiale (21) d'un support d'anneau (17) en forme d'anneau ou d'une ébauche de support d'anneau (26),
b) chauffer ensemble le support d'anneau (17) ou l'ébauche de support d'anneau (26) et le noyau de sel (33), de manière à ce que le noyau de sel (33) et le support d'anneau (17) ou l'ébauche de support d'anneau (26) soient reliés mutuellement,
c) introduire dans un moule l'élément résultant constitué du support d'anneau (17) ou de l'ébauche du support d'anneau (26) et du noyau de sel (33),
d) couler dans le moule l'élément résultant.

2. Procédé selon la revendication 1, **caractérisé en ce que** le noyau de sel (33) est mis en appui le long du bord supérieur (34) et du bord inférieur (35) du support d'anneau (17) ou de l'ébauche d'anneau (26).

3. Procédé selon la revendication 1 ou 2, **caractérisé en ce que** le support d'anneau (17) ou l'ébauche de support d'anneau (26) et le noyau de sel (33) sont reliés l'un à l'autre sous la forme d'un siège de serrage.

4. Procédé selon l'une quelconque des revendications 1 à 3, **caractérisé en ce que** le support d'anneau (17) ou l'ébauche de support d'anneau (26) et le noyau de sel (33) sont chauffés à une température de 600 à 750 °C, de préférence 700 °C.

5. Procédé selon l'une quelconque des revendications 1 à 4, **caractérisé en ce que** le support d'anneau (17) ou l'ébauche de support d'anneau (26) et le noyau de sel (33) sont disposés dans un dispositif de positionnement (27) et mis en appui au moins partiellement avant d'être chauffés.

6. Procédé selon l'une quelconque des revendications 1 à 5, **caractérisé en ce que** le support d'anneau (17) ou l'ébauche de support d'anneau (26) sont fabriqués à partir d'un matériau de type Ni-Resist.

7. Procédé selon la revendication 6, **caractérisé en ce que** l'élément résultant est soumis à un procédé Al-Fin avant la mise en place dans le moule.

8. Procédé selon l'une quelconque des revendications 1 à 7, **caractérisé en ce qu'**une ébauche de support d'anneau (26) est utilisée, dans laquelle une rainure circulaire (16) est intégrée après la coulée.

9. Procédé selon l'une quelconque des revendications 1 à 8, **caractérisé en ce qu'**un piston (10) ou une tête de piston (11) est fabriqué(e).
